# EUROPEAN PATENT APPLICATION

(11) **EP 3 919 366 A1**
(43) Date of publication of application: **08.12.2021**
(21) Application number: 21176836.1
(22) Date of filing: 31.05.2021
(51) Int. Cl.: B63B 49/00, G08G 3/02, B63B 79/00, G05B 23/02

(54) **SYSTEM FOR A MARINE VESSEL**

(30) Priority: 01.06.2020 US 202062704874 P; 21.05.2021 US 202117326843
(71) Applicant: BRUNSWICK CORPORATION, Mettawa, IL 60045 (US)
(72) Inventor: Witte, John, Ada Michigan, 49301 (US); Boks, Michael J., Grand Rapids Michigan, 49546 (US); Deuel, Eric S., Allendale MI, 49401 (US); Scott, Brian C., Comstock Park MI, 49321 (US); Bovill, Richard J., Comber, BT23 5UJ (IE)
(74) Representative: Håmsø Patentbyrå AS

(57) **Abstract**

The invention relates to a system (300) for a marine vessel includes a first peripheral device (16) including a controller (20), and a second peripheral device (26, 28). A first serial bus (30) connects the controller (20) to the second peripheral device (26, 28). At least one sensor (3, 8) is coupled to the controller (20) via a second serial bus (4, 24). The first peripheral device's controller (20) can do one or more of the following: automatically control switches (14) in the first peripheral device (16) in response to information from the sensor (3, 8); stage the first peripheral device (16) upon start-up of the system (300); diagnose a malfunction of the first peripheral device (16) and control the second peripheral device (26, 28) in response to determining that the first peripheral device (16) is malfunctioning; and/or report a status of the first peripheral device (16) over the serial bus (4, 24, 30).

## Description

### FIELD

The present application relates to systems for marine vessels, and more specifically to systems for controlling peripheral devices on board a marine vessel.

### BACKGROUND

Today's "basic" marine vessel system for controlling peripheral devices includes a series of buttons, a keypad, or a multi-function display ("MFD") connected to a plurality of switches, in turn connected to a plurality of respective breakers, which are in turn connected to a plurality of respective peripheral devices. Today's "advanced" system includes a series of buttons, a keypad, or an MFD, in turn connected to a digital switching module, in turn connected to a plurality of peripheral devices. In both basic and advanced systems, individual wired connections must be made to each peripheral device, either from each breaker to each peripheral device, or from the digital switching module to each peripheral device. The peripheral devices are configured to turn ON or OFF in response to switching of the respective mechanical or solid state switches.

In either a basic or an advanced system, wired or wireless sensors can be installed in key locations. The sensors communicate with a telematics control module, which relays information from the sensors to the cloud.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter. The invention is defined by the independent claims. The dependent claims define advantageous embodiments.

According to one example, a system for a marine vessel includes a peripheral device including a controller and a serial bus connected to the controller. The peripheral device's controller is configured to do one or more of the following: automatically control switches in the peripheral device in response to information conveyed to the controller via the serial bus; stage the peripheral device upon start-up of the system; diagnose and attempt to resolve a malfunction of the peripheral device; and/or report a status of the peripheral device over the serial bus.

According to another example, a system for a marine vessel includes a first peripheral device including a controller, and a second peripheral device. A first serial bus is configured to connect the controller to the second peripheral device. At least one sensor is coupled to the controller via a second serial bus. The first peripheral device's controller is configured to do one or more of the following: automatically control switches in the first peripheral device in response to information from the sensor; stage the first peripheral device upon start-up of the system; diagnose a malfunction of the first peripheral device and control the second peripheral device in response to determining that the first peripheral device is malfunctioning; and/or report a status of the first peripheral device over the serial bus.

### BRIEF DESCRIPTION OF THE DRAWINGS

Examples of systems for marine vessels and peripheral devices therefor are described with reference to the following Figures. The same numbers are used throughout the Figures to reference like features and like components.
Fig. 1 illustrates one prior art system for a marine vessel.
Fig. 2 illustrates another prior art system for a marine vessel.
Fig. 3 illustrates an example of a system for a marine vessel according to the present disclosure.
Fig. 4 is a schematic of a controller for use in the system.
Fig. 5 illustrates a schematic of a marine vessel equipped with a system according to another example of the present disclosure.

### DETAILED DESCRIPTION

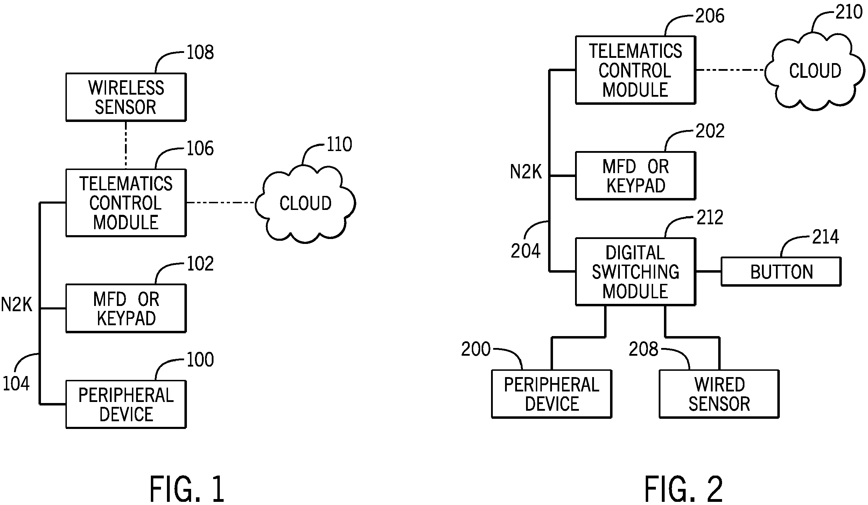

Fig. 1 illustrates a first prior art system for monitoring peripheral devices on board a marine vessel. Although only one peripheral device 100 is shown, additional peripheral devices could be provided and connected to the system in the same manner, as will be described herein. Specifically, the peripheral device 100 can be connected to an MFD or keypad 102 via a serial bus such as a controller area network ("CAN") bus. NMEA 2000 ("N2K") is one communications standard for marine applications, and such a network is shown schematically at 104 as connecting the peripheral device 100 to the MFD or keypad 102. In another example, the peripheral device 100 can be wired to a button, dial, or similar user input device via an analog connection. A telematics control module ("TCM") is also connected to the N2K network 104. A wireless sensor 108 is provided at or near the peripheral device 100 or elsewhere on the marine vessel. The wireless sensor 108 communicates wirelessly with the TCM 106 via any appropriate wireless protocol. Exemplary wireless protocols that could be used for this purpose include, but are not limited to, Bluetooth®, Bluetooth Low Energy (BLE), ANT, and ZigBee. In other examples, sensor(s) can be wired to the TCM 106 and/or connected to the N2K network 104.

The TCM 106 relays information from the wireless sensor 108 to the cloud 110 via any appropriate wireless protocol. From the cloud 110, a user can access the information from the wireless sensor 108. In one example, the peripheral device 100 is a pump, and the wireless sensor 108 is electrically connected between a power source and the pump. The wireless sensor 108 wirelessly communicates the pump's power consumption to the TCM 106, which then informs the user via the cloud 110 whether the pump is running, cavitating, or has debris stuck in it based on the voltage and/or current draw from the pump. Other sensors at other locations, which may or may not be near other peripheral devices, but which are in communication with the TCM 106, can inform the user of other conditions on board the marine vessel in a similar manner.

The system of Fig. 1 requires the original equipment manufacturer ("OEM") to install sensors, sometimes in remote locations, and sometimes along the wiring between the peripheral device 100 and the power source. Performance of a given peripheral device 100 is implied based on the measured current and/or voltage provided to the peripheral device 100. Performance issues may result if the peripheral device 100 is later replaced with a device of a different brand, as the replacement device's current and/or voltage draw may signify different conditions than that of the original device. Additionally, if a sensor 108 indicates that an automatic intervention needs to be made to improve performance, prevent breakdown, etc. of the peripheral device 100, only limited actions are possible because such interventions must be general enough to work with multiple manufacturers' products.

Fig. 2 illustrates another prior art system for a marine vessel. The system includes a TCM 206 and MFD or keypad 202 linked via an N2K network 204, similar to the system of Fig. 1. A digital switching module ("DSM") 212 is also linked to the N2K network 204. The DSM 212 receives inputs from the MFD or keypad 202 via the N2K network 204 and/or from one or more buttons 214 wired to the DSM 212. In response to the inputs, solid state relays in the DSM 212 are activated or deactivated to control a peripheral device 200 wired to the DSM 212. Sensor(s) 208 is/are also wired to the DSM 212. Information from the wired sensor 208 is transmitted over the N2K network 204 via the DSM 212. Through the N2K network 204, the sensed information can be relayed to the TCM 206 and from there to the cloud 210. Note that similar to the system in Fig. 1, wireless sensors could additionally or alternatively be used to provide information to the TCM 206. In other examples, the system does not include the TCM 206, and information from the wired sensor 208 is instead displayed to the user via a visual indicator such as a display screen or a light that is wired to the DSM 212.

The DSM 212 reduces the need to manually wire each peripheral device 200 and sensor 208 on the marine vessel to the MFD or keypad 202 in order for the user to be able to control the peripheral device 200 or view information from the sensor 208. Instead, the DSM 212 can be located remote from the MFD or keypad 202 and connected to the MFD or keypad 202 through the N2K network 204. The DSM 212 is wired to the peripheral device(s) 200 and to the wired sensor(s) 208, which may be located closer to DSM 212 than to the MFD or keypad 202 in order to reduce the total length of wiring needed on board the marine vessel.

The system of Fig. 2 requires custom programming of the DSM 212 in order to control the various peripheral devices 200 on board the marine vessel, which means the OEM must incur non-recurring engineering costs during installation. The DSM 212 merely turns the peripheral device(s) 200 ON or OFF to intervene when information from the wired sensor(s) 208 indicates a problem. Additionally, virtually all boat builders using such digital switching technology reported that they also installed wired backups for critical systems such as bilge pumps and running lights in case the DSM's application programming interface ("API") failed. This results in an increased total length of wiring on board the marine vessel and increases complexity of installation.

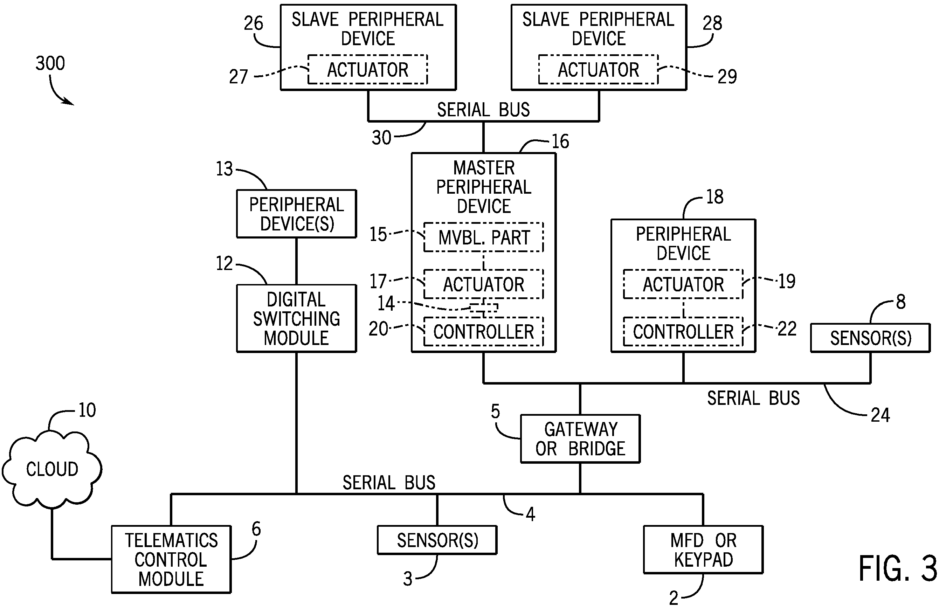

Now turning to Fig. 3, a system 300 according to the present disclosure will be described. The system includes a serial bus 4, such as a CAN bus using the N2K protocol, linking a TCM 6, DSM 12, and MFD or keypad 2. These components operate as described herein above with respect to FIGURES 1 and 2, for example, with the MFD or keypad 2 providing inputs to the system, the DSM 12 turning a peripheral device 13 ON or OFF, and the TCM 6 sending information about the system to the cloud 10 and receiving information from the cloud 10. In one example, serial bus 4 is the main communications bus on the marine vessel to which a helm control module and an engine/motor control module of a marine propulsion device are connected. Although the serial bus 4 has been described as using the N2K communications standard, it could instead use NMEA 0183 or a proprietary network such as SimNet®, SeaTalk®, Dataline 2000™, or CZone®. Note that in alternative embodiments, an MFD and a keypad, as well as other user input devices, can be linked to the serial bus 4. One or more sensors 3 are also connected to the serial bus 4, which sensors 3 can be, but are not limited to, vessel speed sensors, image sensors, proximity sensors, navigational sensors, or other sensors known to be linked to a serial bus 4 on a marine vessel.

The vessel speed sensor(s) can be any sensor capable of determining the speed of the marine vessel. The vessel speed sensor can be a pitot tube sensor, a paddle wheel sensor, an ultrasonic speed sensor, or an electromagnetic speed sensor. In another example, various readings of geographical position over time from a navigational sensor can be used to calculate the marine vessel's speed over ground. This calculation can be done in the navigational sensor itself or by an external controller. One example of a vessel speed sensor is Part No. 31-606-6-01 provided by Airmar of Milford, New Hampshire.

The image sensor(s) can be any image sensor capable of detecting objects external to the marine vessel. The image sensor may be a charge-coupled device (CCD) or an active-pixel sensor (CMOS) and can be part of an infrared or near-infrared camera. In another example, the image sensor is a microbolometer image sensor as part of a thermal night vision camera. The camera containing the image sensor can be pivotable and/or rotatable in order to focus on an external object of interest. Examples of cameras with image sensors are the M364C and M364-LR provided by Flir Systems of Wilsonville, Oregon.

The proximity sensor(s) can be any type of proximity sensor suitable for determining the proximity of an external object with respect to the marine vessel. For example, the proximity sensor can be a radar, sonar, laser, lidar, ultrasonic, or infrared sensor. Such devices are well known in the art and therefore will not be described further herein. One example of a radar unit is the Quantum 2 provided by Raymarine of Fareham, United Kingdom.

The navigational sensor(s) can be any type of navigational sensor capable of determining the global position of the marine vessel in latitude and longitude, and optionally also the vessel's heading, pitch, roll, and yaw. For example, the navigational sensor can be any type of GNSS device, a GPS receiver, a differential GPS receiver, a GPS receiver equipped with an inertial measurement unit (IMU), an attitude and heading reference system (AHRS), or a GPS-aided inertial navigation system. Such devices are well known in the art and therefore will not be described further herein. One example of a navigational sensor is Part No. 8M0105389 GPS/IMU KIT, provided by Mercury Marine of Fond du Lac, Wisconsin.

The system 300 also includes at least one peripheral device 16, 18 having a controller 20, 22 integrated therein. The system 300 includes an additional serial bus 24 connected to the controllers 20, 22. In one example, the serial bus 24 may also be a CAN bus using the N2K protocol. One or more sensors 8 may be linked to the serial bus 24 as well and thereby provided in signal communication with the controllers 20, 22. The serial bus 24 is linked to the serial bus 4 (e.g., the central communications bus) by way of a gateway or bridge 5, depending on whether the two serial buses 4, 24 use the same protocol. Note that some marine vessel components use different versions of the NMEA protocol and/or one of the serial buses 4, 24 may be a local interconnect network ("LIN") bus. The additional serial bus 24 may be required due to a limit on the number of nodes on the serial bus 4 and/or to work around physical constraints on the marine vessel. Moreover, it may be desirable to provide an initially separate serial bus 24 to connect all peripheral devices noted herein below (e.g., pumps, seats, lights, cleats, antennas, etc.) as part of a retrofit, as at least some of such devices may not have been connected to a serial bus before, but instead hardwired to switches at the helm or connected to the DSM 12. Such a retrofit serial bus 24 could then be connected to the existing serial bus 4 on the marine vessel by way of the gateway or bridge 5 without having to disturb the connections already made to the existing serial bus 4. In another example, the serial buses 4 and 24 are a single bus. Note that although only two peripheral devices 16, 18 are shown as being directly connected to the serial bus 24, additional peripheral devices could be connected thereto.

Still referring to Fig. 3, the peripheral device 16 comprises an actuator 17 configured to move a movable part 15 of the peripheral device 16. The controller 20 is in signal communication with the actuator 17 and configured to control the actuator 17 by selectively providing power thereto. In the case in which the peripheral device 16 is a pump, the actuator 17 could be a motor that powers the pump. In the case in which the peripheral device 16 is a light, antenna, or cleat, the actuator 17 could be a motor or linear or rotary actuator that extends and retracts a movable part 15 of the light, antenna, or cleat with respect to a mounting surface or housing on the marine vessel. In the case in which the peripheral device 16 is a seat, the actuator 17 could be a motor or linear actuator that moves a movable part 15 of the seat with respect to the deck of the marine vessel.

In the present example, the peripheral device 16 is a master peripheral device, and the system 300 further includes at least one slave peripheral device 26, 28 connected to the master peripheral device 16 by an additional serial bus 30 and configured to be controlled by the master peripheral device's controller 20. Here, the additional serial bus 30 may not be required to handle as much data as the serial buses 4, 24, and therefore may be a LIN bus, which is generally also less expensive than a CAN bus. Alternatively, the devices could use powerline communication. The master peripheral device 16 can determine the statuses of the slave peripheral devices 26, 28 via the serial bus 30, and its controller 20 can be programmed to change the functioning of the master peripheral device 16 and/or the slave peripheral devices 26, 28 in response to those statuses. The master peripheral device 16 can also be programmed to control its own functioning and/or the functioning of the slave peripheral devices 26, 28 in response to information from the other peripheral device 18 on the serial bus 24, the sensor(s) 8 wired to the serial bus 24, any sensor(s) 3 wired to the serial bus 4, and/or information from the cloud 10 (via the TCM 6 and serial buses 4, 24).

In the example shown, the slave peripheral devices 26, 28 are of the same type as the master peripheral device 16 and each includes an actuator 27, 29 coupled to the controller 20 of the master peripheral device 16 via the serial bus 30. Thus, the controller 20 acts as a master controller and controls the actuators 17, 27, 29 of all peripheral devices 16, 26, 28 in the master-slave group. Meanwhile, the peripheral device 18 may be of a different type than the peripheral devices 16, 26, 28, and its controller 22 may control its actuator 19 and actuators in slave peripheral devices of its same type on board the marine vessel, to which its controller 22 is connected via another serial bus (not shown). The controller 22 may configured similarly to the controller 20, and therefore only the controller 20 will be described in further detail, it being understood the same description applies to the controller 22.

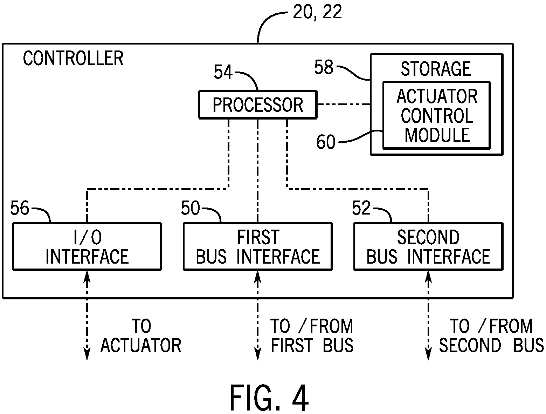

Now referring to Fig. 4, the controller 20 includes at least one transceiver for receiving information provided by the sensors 3, 8 and/or other peripheral devices 18, 26, 28 via the serial bus(es) 4, 24. The controller 20 has a first bus interface 50 (in one example, a CAN transceiver) for communication via the serial bus 24. By way of the first bus interface 50, the controller 20 is in signal communication with the bus 24, by way of which the controller 20 may be provided with information from the sensors 3, 8 and any operator input devices (such as the MFD or keypad 2) connected to the serial bus(es) 4 or 24. If the controller 20 acts as a master controller to control actuators 27, 29 in other peripheral devices 26, 28 of the same type, the controller 20 also includes a second bus interface 52 (for example, a LIN transceiver) for communication via the serial bus 30.

The controller 20 also includes a processing system 54 and a storage system 58. The processing system 54 includes one or more processors, which may each be a microprocessor, a general-purpose central processing unit, an application-specific processor, or any other type of logic-based device. The processing system 54 may also include circuitry that retrieves and executes software from the storage system 58. The storage system 58 can comprise any storage media, or group of storage media, readable by the processing system 54, and capable of storing software. The storage system 58 may include volatile and nonvolatile, removable and non-removable media implemented in any method or technology for storing information, such as computer-readable instructions, program modules comprising such instructions, data structures, etc. The storage system 58 may be implemented as a single storage device but may also be implemented across multiple storage devices or subsystems. Examples of storage media include random access memory, read only memory, optical discs, flash memory, virtual memory, and non-virtual memory, or any other medium which can be used to store the desired information and that may be accessed by an instruction execution system, as well as any combination of variation thereof. The storage media may be housed locally with the processing system 54, or may be distributed, such as distributed on one or more network servers, such as in cloud computing applications and systems. In some implementations, the storage media is non-transitory storage media. In some implementations, at least a portion of the storage media may be transitory.

The controller 20 also includes an input/output interface 56 that transfers information and commands to and from the processing system 54. In response to the processing system 54 carrying out instructions stored in an actuator control module 60, the processing system 54 relays commands via the I/O interface 56 to the actuator 17 of the peripheral device 16 and/or the actuators 27, 29 of the peripheral devices 26, 28. Other input and/or output devices may also be connected to the I/O interface 56, and the examples shown and discussed herein are not limiting.

The actuator control module 60 is a set of software instructions executable to activate the actuator 17 of the peripheral device 16 and/or the actuators 27, 29 of the peripheral devices 26, 28. The actuator control module 60 may be a set of software instructions stored within the storage system 58 and executable by the processing system 54 to operate as described herein, such as to move a movable part 15 of the peripheral device 16 in response to information from the sensors 3 and/or 8, the MFD or keypad 2, the telematics control module 6, and/or the other peripheral device 18. In another example, the controller 20 includes a wireless transceiver (not shown) capable of two-way wireless communication, and the sensors and other devices communicate wirelessly with the controller 20. Exemplary wireless protocols that could be used for this purpose are noted herein above.

In one example, all of the components of the controller 20 are provided on a single integrated circuit board located inside a portion of the peripheral device.

According to the present disclosure, one or both of the peripheral devices' controllers 20, 22 is/are configured to do at least one of the following: automatically control switches 14 in the peripheral device 16, 18, 26, 28 in response to information conveyed to the controller 20, 22 via the serial bus 4, 24, 30; stage the peripheral device 16, 18, 26, 28 upon start-up of the system 300; diagnose and attempt to resolve a malfunction of the peripheral device 16, 18, 26, 28; and/or report a status of the peripheral device 16, 18, 26, 28 over the serial bus 4, 24, 30. Each of these functions will be described in turn.

As noted, one or both of the peripheral devices' controllers 20, 22 is/are configured to control switches 14 in the peripheral device 16, 18, 26, 28. Generally, this is done by the controller 20, 22 controlling current to an electronic switch 14 (such as a transistor, diode, SCR, MOSFET, or the like) in electrical communication with the controller 20, 22. Although the switches 14 are shown as being between the controller 20 and the actuator 17, note that they could be on an integrated circuit board with the controller 20 or located in the actuator 17. For example, the peripheral device's controller 20 and/or 22 can be programmed to turn the respective peripheral device 16 and/or 18 ON or OFF in response to a sensed condition, change the current or voltage provided to the respective peripheral device 16 and/or 18 under certain circumstances, or run a sequence of events to test the peripheral device's functioning. In still other examples, the controller 20, 22 can be programmed to move part of the peripheral device 16, 18 in response to a signal from another peripheral device in proximity thereto, such as a wireless FOB or a wireless lanyard. In this case, the sensor 3 or 8 might be a receiver programmed to recognize the particular FOB/lanyard. In still other examples, the peripheral device 16 and/or 18 can be programmed to move in response to weather conditions, GPS position, time of day, or sensed proximity of an object external to the marine vessel. Such information can be relayed via the serial bus 24 from an appropriate sensor 8, such as an anemometer, GPS receiver, or proximity sensor aboard the marine vessel. Such information could additionally or alternatively come from the one or more sensors 3 wired to the serial bus 4 or in wireless communication with the TCM 6. Such information could additionally or alternatively be information in the cloud 10 collected from other users' prior experiences and could be communicated to the peripheral devices 16 and/or 18 via the TCM 6 and serial buses 4, 24. In the same way that the controller 20 can use such information to control switches 14 in the peripheral device 16, the controller 20 can use this information to control switches (not shown, but understood to be between the controller 20 and actuator 27, 29 or within the actuator 27, 29) in the peripheral devices 26, 28 as well.

As noted, one or both of the peripheral devices' controllers 20, 22 is/are configured to stage the peripheral device 16, 18 upon start-up of the system 300. The controller 20, 22 may determine that the system 300 has been started in response to turning of a key in an ignition, pressing of a START button at the helm or on a remote control, and/or other similar user inputs. In one example, the peripheral device's controller 20, 22 can be programmed to activate the actuator 17, 19 to move the respective peripheral device 16, 18 to a predetermined position, turn the respective peripheral device 16, 18 ON or OFF, or run a sequence of events to test the peripheral device's functioning upon start-up of the system 300 and/or upon receiving a user-input command. In one particular example, the peripheral device 16, 18 could move to a predetermined position based on its respective controller 20, 22 sensing proximity of a particular wireless FOB or lanyard upon system startup. This might be useful if the peripheral device is a seat, as it can enable memory-positioning of the seat that is tailored to a particular user in response to a unique code from the FOB/lanyard. In the same way that the controller 20 can stage the peripheral device 16 upon system start-up, the controller 20 can stage the peripheral devices 26, 28 as well.

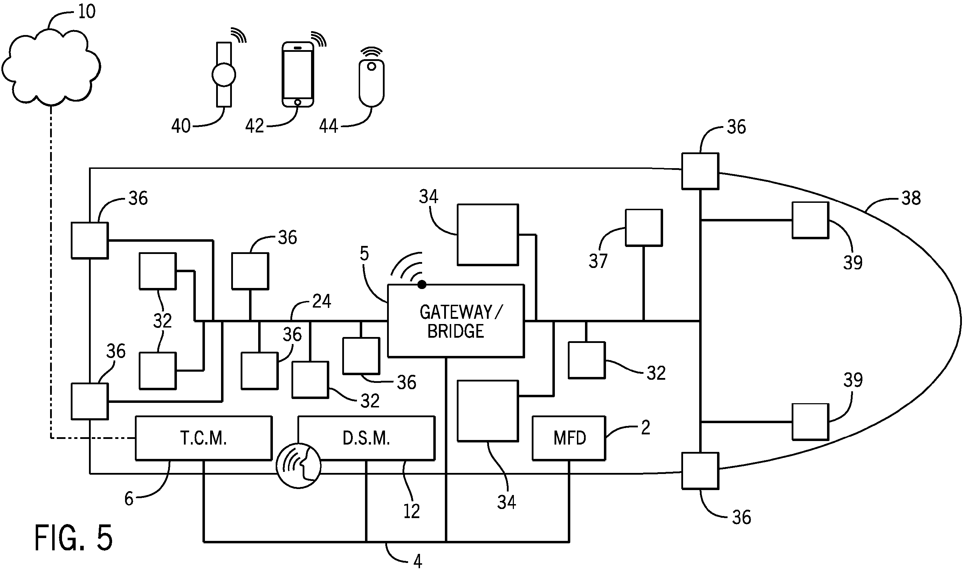

One or both of the peripheral devices' controllers 20, 22 is also configured to automatically resolve errors in the peripheral device's functioning and/or report a status of the respective peripheral device 16, 18 over the serial bus 4, 24, 30 which functions may be related in some instances. After the peripheral device's controller 20, 22 diagnoses a malfunction, or if the sensor 3, 8 senses a condition related to the functioning of the peripheral device 16, 18, the peripheral device's own controller 20, 22 can be programmed to turn the peripheral device 16, 18 OFF and back ON again or to activate the actuator 17, 19 run a predetermined sequence of events in order to attempt to resolve the malfunction. Because the peripheral devices 16, 18 are linked via the serial bus 24, one peripheral device can determine the status of the other(s), and both peripheral devices 16 and 18 can obtain information directly from the sensor 8 in order to determine what actions to take. Because the peripheral devices 16, 26, 28 are linked via the serial bus 30, the master peripheral device 16 can determine the status of the slave peripheral devices 26, 28 as well before determining what actions to take. Information on the statuses of the peripheral devices 16, 18 26, 28 and information from the sensor 8 can also be communicated via the gateway or bridge 5 and the serial bus 4 to the TCM 6 and from there to the cloud 10. Such information can include (but is not limited to) whether and/or what malfunction was sensed, whether and/or what steps were taken to resolve the malfunction, and whether such steps were successful. In one example, the controller 20, 22 is configured to output to a user display (see, for example, MFD 2 and smart device 42, Fig. 5) an indication of the malfunction and an indication of whether the predetermined sequence was able to resolve the malfunction. In another example, after diagnosing the malfunction, the controller 20, 22 is configured to output to the user display an indication of the malfunction and an option for a user to command the controller 20, 22 to activate the actuator 17, 19, 27, 29 according to a predetermined sequence in order to attempt to resolve the malfunction. In this way, the user has a choice via a helm input device and/or the user's remote input device (e.g., phone, tablet, etc.) whether to permit the peripheral device to attempt to self-correct the malfunction or whether to investigate in-person instead.

As noted, the master-slave configuration of the peripheral devices 16, 26, 28 also presents opportunities for the system 300 to automatically take steps in response to a malfunction. For example, the controller 20 is configured to automatically control switches (not shown, but understood to be between the controller 20 and actuator 27, 29 or within the actuator 27, 29) in the slave peripheral device 26, 28 (for example, to turn the slave peripheral devices 26, 28 ON) in response to the controller 20 determining that the master peripheral device 16 is malfunctioning. This could be helpful, for example, if the peripheral devices 16, 26, 28 are all pumps, so that the pumps that are not malfunctioning can remove water when the malfunctioning pump can no longer do so. It may also be helpful if the peripheral devices 16, 26, 28 are all lights, such that the lights that are not malfunctioning can be turned ON when the malfunctioning light no longer serves its purpose.

One example of a system 300 for a marine vessel according to the present disclosure therefore includes a first peripheral device 16 including a controller 20, and a second peripheral device 18, 26, 28. A first serial bus 24, 30 is configured to connect the controller 20 to the second peripheral device 18, 26, 28. At least one sensor 3, 8 is coupled to the controller 20 via a second serial bus 4, 24. The first peripheral device's controller 20 is configured to do one or more of the following: automatically control switches 14 in the first peripheral device 16 in response to information from the sensor 3, 8; stage the first peripheral device 16 upon start-up of the system 300; diagnose a malfunction of the first peripheral device 16 and control the second peripheral device 18, 26, 28 in response to determining that the first peripheral device 16 is malfunctioning; and/or report a status of the first peripheral device 16 over the serial buses 4, 24, 30.

Note that, unlike the system in Fig. 2, the DSM 12 in the present system 300 does not need to be linked by individual wires to the peripheral devices 16, 18 that have controllers 20, 22. Rather, these "smart" peripheral devices 16, 18 can turn themselves ON or OFF or run predetermined routines based on their controllers' own commands, signals from the MFD or keypad 2 via the serial buses 4 and 24, signals from another peripheral device or the sensor 8 via the serial bus 24, signals from a sensor 3 wired to the serial bus 4, information from the cloud 10 via the TCM 6, or a combination of any of these. The DSM 12 can instead be used to control a peripheral device 13 (or multiple peripheral devices) that does not benefit from "smart" functions, such as a horn or windshield washer fluid pump.

As shown in Fig. 5, in some examples, the "smart" peripheral device is at least one of a pump 32, a seat 34, a light 36, an antenna 37, and/or a cleat 39 on board the marine vessel 38. Each of these devices can be connected to the CAN serial bus 24 as shown, or LIN-connected master and slave subsystems can be provided as described with respect to Fig. 3, depending on the location of the peripheral device in question. For example, one pump 32 can be the master pump, with all other pumps 32 being slaves. The gateway or bridge 5 links the serial bus 24 to the serial bus 4, by way of which information about any of the peripheral devices 32, 34, 36, 37, 39, etc. is made available to the TCM 6 and then to the cloud 10, and by way of which information from the cloud 10 can be used to control the peripheral devices 32, 34, 36, 37, 39, etc. The user can then be alerted as to certain events pertaining to this information and/or select to perform functions aboard the marine vessel 38 by way of a wireless lanyard 40, smart device 42, or wireless FOB 44.

The following are some specific examples of the types of information that a peripheral device with an integrated controller can use or relay to a user. If the peripheral device is a pump 32, the controller and/or user can be provided with information related to the following: the current draw of the pump's motor and/or whether the pump is "ON" or "OFF", such as determined by a current sensor; whether the pump is airlocked and/or blocked, such as determined by a water sensor at the outlet of the pump in conjunction with information from a current sensor; whether service is needed and on which part and/or a remaining life of the pump based on historical malfunction logs. Additional details as to how such information is measured, logged, and used is provided in Applicant's co-pending U.S. Application Serial No. 16/952,515, filed on November 19, 2020. If the peripheral device is a seat 34, the controller and/or user can be provided with information related to the following: the position of the seat as determined by a position sensor or historical knowledge related to activation of the seat's actuator; an identification of the particular seat in question and which seats are connected to the serial bus as indicated by unique identification codes for each seat; a status of the seat such as whether the seat has encountered a fault in attempting to achieve a desired position; whether a light or temperature-control assembly in the seat is functioning properly. Additional details as to how such information is measured, logged, and used is provided in Applicant's co-pending U.S. Application Serial Nos. 17/227,963 and 17/227,973, filed on April 12, 2021. If the peripheral device is a light 36, the controller and/or user can be provided with information related to the following: whether the light is malfunctioning (e.g., not ON when it should be) as determined by a current sensor and/or ambient light sensor; the color of the light as determined by a unique identification code for each type of light; whether the light is extended or retracted with respect to a housing or a surface of the marine vessel 38. Additional details as to how such information is measured, logged, and used is provided in Applicant's co-pending U.S. Application Serial No. 17/227,959, filed on April 12, 2021.

Thus, the present disclosure is of a marine vessel 38 having "smart" base peripheral devices capable of computing at the edge. Known simple "ON/OFF" base peripheral devices are replaced with pre-packaged smart subsystems with self-switching, self-staging, and/or self-malfunction resolution and/or reporting. This allows for more enhanced smart functions to be provided (rather than simple ON/OFF) due to the peripheral device manufacturer's deep knowledge of the product, what conditions signify a problem, and how to fix that problem. The device manufacturer essentially "owns" the smart functions and can confirm whether the device's conditions are accurate and correct via internal programming, rather than requiring programming of each device into a larger monitoring system as it is installed. Thus, the present solution can be used on marine vessels where MFDs are optional, and can be installed by businesses in which electronics systems engineering expertise is not typically part of the staffing structure.

The present solution has a system-agnostic architecture that ensures the peripheral devices' compatibility with alternative vessel systems into which the OEM may choose to integrate these devices, as each device is "plug-and-play" with its own internal controller. Device manufacturers can ensure future compatibility with a given vessel's system even when service or replacement is required. Furthermore, because each device computes at the edge, the system can still operate safely if the API network goes down on the marine vessel 38. This is not necessarily the case with a central digital switching module-type arrangement.

## Claims

1. A system (300) for a marine vessel, the system (300) including:
a peripheral device (16, 18) including a controller (20, 22); and
a serial bus (24, 30) connected to the controller (20, 22);
wherein the peripheral device's controller (20, 22) is configured to do one or more of the following:
automatically control switches (14) in the peripheral device (16, 18) in response to information conveyed to the controller (20, 22) via the serial bus (24, 30);
stage the peripheral device (16, 18) upon start-up of the system (300); diagnose and attempt to resolve a malfunction of the peripheral device (16, 18); and/or
report a status of the peripheral device (16, 18) over the serial bus (24, 30).

2. The system of claim 1, wherein the peripheral device (16) is a master peripheral device, and further comprising a slave peripheral device (26, 28) connected to the master peripheral device (16) by an additional serial bus (30).

3. The system of claim 2, wherein the controller (20) is configured to automatically control switches in the slave peripheral device (26, 28) in response to the controller (20) determining that the master peripheral device (16) is malfunctioning.

4. The system of any of the above claims, wherein the peripheral device (16, 18) comprises an actuator (17, 19) in signal communication with the controller (20, 22), and wherein after diagnosing the malfunction, the controller (20, 22) is configured to activate the actuator (17, 19) according to a predetermined sequence in order to attempt to resolve the malfunction.

5. The system of claim 4, wherein the controller (20, 22) is configured to output to a user display (2, 42) an indication of the malfunction and an indication of whether the predetermined sequence was able to resolve the malfunction.

6. The system of any of claims 1 to 3, wherein the peripheral device (16, 18) comprises an actuator (17, 19) in signal communication with the controller (20, 22), and wherein after diagnosing the malfunction, the controller (20, 22) is configured to output to a user display (2, 42) an indication of the malfunction and an option for a user to command the controller (20, 22) to activate the actuator (17, 19) according to a predetermined sequence in order to attempt to resolve the malfunction.

7. The system of any of claims 1 to 3, wherein the peripheral device (16, 18) comprises an actuator (17, 19) in signal communication with the controller (20, 22), and wherein the controller (20, 22) is configured to activate the actuator (17, 19) to move a movable part (15) of the peripheral device (16, 18) upon start-up of the system (300).

8. The system of any of the above claims, wherein the peripheral device (16, 18) is one of a pump, a seat, a light, an antenna, and a cleat.

9. The system of any of the above claims, further comprising a sensor (3, 8) in signal communication with the controller via the serial bus (24), wherein the sensor (3, 8) provides the information in response to which the controller (20, 22) automatically controls the switches (14) in the peripheral device (16, 18).

10. The system of any of the above claims, further comprising a gateway or bridge (5) connecting the serial bus (24) to an additional serial bus (4), wherein the additional serial bus (4) is a central communications bus on the marine vessel.

11. The system of claim 1, wherein the peripheral device is a first peripheral device (16) and the serial bus is a first serial bus (30), and further comprising:
a second peripheral device (26, 28), the first serial bus (30) being configured to connect the controller (20) to the second peripheral device (26, 28); and
at least one sensor (3, 8) coupled to the controller (20) via a second serial bus (4, 24);
wherein the first peripheral device's controller (20) is configured to do one or more of the following:
automatically control switches (14) in the first peripheral device (16) in response to information from the sensor (3, 8); and/or
control the second peripheral device (26, 28) in response to determining that the first peripheral device (16) is malfunctioning.

12. The system of claim 11, wherein the first peripheral device (16) is a master peripheral device, and the second peripheral device (26, 28) is a slave peripheral device configured to be controlled by the first peripheral device's controller (20).

13. The system of claim 12, wherein the controller (20) is configured to automatically control switches in the second peripheral device (26, 28) in response to the controller (20) determining that the first peripheral device (16) is malfunctioning.

14. The system of claim 11, wherein the first peripheral device (16) comprises an actuator (17) in signal communication with the controller (20), and wherein after diagnosing the malfunction of the first peripheral device (16), the controller (20) is configured to activate the actuator (17) according to a predetermined sequence in order to attempt to resolve the malfunction or to output to a user display (2, 42) an indication of the malfunction and an option for a user to command the controller (20) to activate the actuator (17) according to a predetermined sequence in order to attempt to resolve the malfunction and/or to output to a user display (2, 42) an indication of the malfunction and an indication of whether the predetermined sequence was able to resolve the malfunction.

15. The system of any of claims 11 to 14, wherein the first and second peripheral devices (16, 26, 28) are the same type of peripheral device.
